(19) Europäisches Patentamt
European Patent Office
Office européen des brevets

(11) Veröffentlichungsnummer: **0 008 373**
**B1**

(12) # EUROPÄISCHE PATENTSCHRIFT

(45) Veröffentlichungstag der Patentschrift: **16.02.83**

(51) Int. Cl.[3]: **C 08 J 3/22,** C 08 L 67/02

(21) Anmeldenummer: **79102562.0**

(22) Anmeldetag: **20.07.79**

(54) **Verfahren zur Herstellung einer Pigmentzubereitung, die erhaltene Pigmentzubereitung und damit in der Masse gefärbte lineare Polyester.**

(30) Priorität: **01.08.78 CH 8218/78**
**21.06.79 CH 5803/79**

(43) Veröffentlichungstag der Anmeldung:
**05.03.80 Patentblatt 80/5**

(45) Bekanntmachung des Hinweises auf die Patenterteilung:
**16.02.83 Patentblatt 83/7**

(84) Benannte Vertragsstaaten:
**BE CH DE FR GB IT NL**

(56) Entgegenhaltungen:
**DE - A - 1 469 980**
**DE - A - 2 312 153**
**GB - A - 889 617**

(73) Patentinhaber: **CIBA-GEIGY AG**
**Patentabteilung Postfach**
**CH-4002 Basel (CH)**

(72) Erfinder: **Laely, Andreas, Dr.**
**Grabenring 24**
**CH-4123 Allschwil (CH)**
Erfinder: **Zwahlen, Günther**
**Landskronstrasse 12**
**D-4143 Dornach (CH)**
Erfinder: **Buxbaum, Lothar, Dr.**
**Haus Litzelröder**
**D-6145 Lindenfels/Odenwald (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 008 373 B1

# Verfahren zur Herstellung einer Pigmentzubereitung die erhaltene Pigmentzubereitung und damit in der Masse gefärbte lineare Polyester

Es ist bekannt, lineare Polyester in der Masse mit Hilfe von Pigmentzubereitungen, sogenannten Masterbatches, zu färben. Danach wird dem spinnbaren Polyestermaterial ein thermoplastisches Harz, dem ein Pigment beigemischt ist, in Form eines Granulats, eines Pulvers oder von Schnitzeln zugesetzt.

Nach dem Verfahren der britischen Patenschrift Nr. 1,044,378 wird das Pigmentkonzentrat durch Plastifizierung eines Gemisches von Pigment und niedrigschmelzendem Polyester hergestellt und dann in die zu färbende Masse eines höherschmelzenden Polyesters eingearbeitet. Das durch plastifizierende Knetung erhaltene Pigmentkonzentrat weist in den meisten Fällen nicht die für die Massefärbung erforderliche Verteilung und Feinheit der Pigmente auf, was sich besonders auf die Färbung mit organischen Pigmenten nachteilig auswirkt. Das zeigt sich beispielsweise in einem untragbaren Druckanstieg in der Schmelzspinnapparatur, an vermehrten Fadenbrüchen, an schlechter Verstreckbarkeit, an einer Beeinträchtigung der textilen Daten und nicht zuletzt an einem schlechten färberischen Effekt.

Im Verfarhen der US-Patentschrift 4,012,358 wird vorgeschlagen, diese Schwierigkeiten zu umgehen, indem zunächst ein Vorkonzentrat aus 50 bis 75 Gewichtsteilen Pigment und 50 bis 25 Gewichtsteilen Polyäthylen hergestellt wird, welches mit der ein- bis vierfachen Menge an spinnbarem Polyester verschmolzen und zu Granulat verarbeitet wird. Der Nachteil dieses Verfahrens besteht jedoch darin, dass Polyäthylen und Polyester unverträglich sind und zu einer ausgeprägten Zweiphasenbildung neigen, wodurch inhomogene Mischungen erhalten werden, die wiederum das Spinn- und Streckverhalten sowie die Fasereigenschaften beeinträchtigen können.

Es wurde nun ein Verfahren zur Herstellung einer Pigmentzubereitung zum Färben linearer Polyester in der Masse gefunden, welches die Nachteile beider vorbekannter Verfahren beseitigt und zu einem Produkt mit einem äusserst feinverteilten Pigment in einem mit dem spinnbaren Polyester verträglichen Harz führt. Das erfindungsgemässe Verfahren ist dadurch gekennzeichnet, dass man aus 20 bis 80 Gewichtsteilen Pigment und 80 bis 20 Gewichtsteilen eines Polyesters, der zwischen 60 und 160°C schmilzt, durch Lösungsmittel-Salzknetung oder Flushen des Pigments in die Schmelze des Polyester ein Vorkonzentrat herstellt, welches mit einem spinnbaren linearen Polyester verschmolzen und zu Granulat verarbeitet wird.

Verzugsweise geht man zur Herstellung des Vorkonzentrats von 40 bis 60 Gewichtsteilen Pigment und 60 bis 40 Gewichtsteilen des Polyesters aus.

Zweckmässigerweise verschmilzt und granuliert man das Vorkonzentrat aus Pigment und Polyester in derartiger Menge mit einem spinnbaren linearen Polyester, dass das Granulat 3 bis 30 Gew.-%, vorzugsweise 5 bis 25 Gew.-%, Pigment enthält. Als Pigmente kommen sowohl anorganische als auch organische Pigmente in Frage, die gegenüber der Polyesterschmelze beständig sind, wobei letztere jedoch bevorzugt sind. Als anorganische Pigmente seien beispielsweise gennant: Metalloxide und -sulfide, Ultramarin, Weisspigmente, wie Titandioxid, und andere. Zu den bevorzugten organischen Pigmenten gehören neben Russen alle für die Massefärbung von Polyestern bekannten Pigmente wie beispielsweise aus der Klasse der Azo-, Azomethin-, Anthrachinon-, Chinophthalon-, Phthalocyanin-, Perinon-, Perylentetracarbonsäurediimid-, Perylentetracarbonsäuredianhydrid-, Dioxazin-, Thioindigo-, Iminoisoindolinonoder Chinacridonpigmente. Auch Metallkomplexe, beispielsweise von Azo-, Azomethin- oder Methinfarbstoffen mit Pigmentcharakter, sind geeignet.

Als Polyester können lineare thermoplastische Polyester auf Basis von aromatischen oder aliphatischen Dicarbonsäuren oder Gemischen von aromatischen/aliphatischen Dicarbonsäuren mit aliphatischen Diolen verwendet werden. Beispielsweise handelt es sich bei den aromatischen Dicarbonsäuren um Terephthalsäure oder Isophthalsäure. Als aliphatische Dicarbonsäuren kommen lineare oder verzweigte Dicarbonsäuren mit bis zu 20, vorzugsweise 4—12 C-Atomen in Betracht. Beispiele sind Azelainsäure, Sebacinsäure und Adipinsäure. Als Diole kommen in Betracht, z.B. Aethylenglykol, 1,4-Butandiol, 1,4-Di(hydroxymethyl)cyclohexan oder Neopentylglykol, die mit den Dicarbonsäuren zu einem Polykondensat kondensiert werden, dessen Molgewicht vorzugsweise zwischen 18000 und 30000 liegt und das zwischen 60 und 160°, vorzugsweise zwischen 100—160°, schmilzt.

Als für das erfindungsgemässe Verfahren besonders geeignete Polyester haben sich Polyester erwiesen, die zwischen 60 und 160°C schmelzen und aus

a) 25—30 Mol.-% Terephthalsäureresten und

20—25 Mol.-% Azelainsäureresten oder von Resten einer aliphatischen Dicarbonsäure mit 4—12 C-Atomen und

b) 50 Mol.-% Butandiol- und Diäthylenglykol- oder Triäthylenglykolresten im Verhältnis 15:1 bis 5:1 bestehen.

In diesen Polyestern können etwa 7 Mol.-% der Terephthalsäurereste durch Isophthalsäurereste ersetzt sein. Ebenso kann bis zu 20 Gew.-% Aethylenglykol im Diäthylenglykol enthalten sein.

Die erfindungsgemäss verwendeten Polyester sind vorteilhaft bei 80—90°C zumindest teilweise in Diacetonalkohol und/oder Dimethylformamid bzw. einer Mischung aus Diacetonalkohol und Dimethylformamid löslich.

Vorzugsweise wird das Vorkonzentrat aus Pigment und Polyester durch eine Lösungsmittel-Salzknetung hergestellt, welche eine grösstmögliche Feinheit wie auch Verteilung des Pigments im

Polyester bewirkt. Die Verarbeitung erfolgt zweckmässigerweise bei erhöhter Temperatur, beispielsweise 80 bis 95°C, in Gegenwart eines anorganischen Salzes, wie insbesondere Natriumchlorid, aber auch Kaliumchlorid, Natriumsulfat oder Bariumchlorid. Die Salze lassen sich in einfacher Weise mit Wasser wieder auswaschen. Bei der Knetung ist die Zugabe eines Lösungsmittels, insbesondere eines in Wasser löslichen organischen Lösungsmittels, wie beispielsweise Diacetonalkohol oder Dimethylformamid, vorteilhaft, worin der verwendete Polyester zumindest teilweise löslich ist. Nach Abschluss des Knetprozesses wird die Knetmasse zweckmässig durch Behandlung mit Wasser von Salzen und Lösungsmitteln befreit und getrocknet.

Als spinnbare lineare Polyester, mit denen die erhaltenen Vorkonzentrate verschmolzen und zu Masterbatches verarbeitet werden, seien insbesondere solche erwähnt, die durch Polykondensation von Terephthalsäure oder deren Estern mit Glykolen der Formel $HO—(CH_2)_n—OH$, worin n die Zahl 2 bis 10 bedeutet, oder mit 1,4-Di(hydroxymethyl)-cyclohexan oder durch Polykondensation von Glykoläthern von Hydroxybenzoesäuren erhalten werden. Der Begriff lineare Polyester umfasst ebenfalls Copolyester, die durch teilweisen Ersatz der Terephthalsäure durch eine andere Dicarbonsäure oder eine Hydroxycarbonsäure und/oder durch teilweisen Ersatz des Glykols durch eine anderes Diol erhalten werden.

Von besonderem Interesse sind jedoch Polyäthylenterephthalate, die meistens mit den zu färbenden linearen Polyestern identisch sind. Zur Herstellung der Pigmentzubereitung wird das Polyäthylenterephthalat zweckmässig mit der homogenen Mischung des Vorkonzentrats aus Pigment und Polyester durch geeignete Methoden gemischt, die Mischung im Extruder (Ein- oder Zweiwellenextruder) oder kontinuierlich arbeitenden Kneter geschmolzen und in Granulate übergeführt. Die Verarbeitung zu Granulaten kann beispielsweise auch ohne Vormischung auf einem Extruder erfolgen, indem einerseits das feinkörnige Vorkonzentrat und andererseits Polyäthylenterephthalat-Granulat im gewünschten Mengenverhältnis kontinuierlich zudosiert werden. Der angestrebte Pigmentgehalt im Granulat von vorzugsweise 5 bis 25 Gew.-% kann durch Zugabe der entsprechenden Menge an spinnbarem linearem Polyester zum Vorkonzentrat erzielt werden. In der Regel werden etwa gleiche Mengen Vorkonzentrat und linearer Polyester miteinander verschmolzen und zu zylinder- oder quaderförmigen Granulaten verarbeitet. Für die Herstellung des Pigmentkonzentrats können auch Mischungen verschiedener Pigmente verwendet werden. Ebenso können Mischungen verschiedener Polyester verwendet werden.

Das Verfahren der zweistufigen Arbeitsweise hat zudem den Vorteil, dass durch gleichzeitige Verwendung von Pigment-Vorkonzentraten verschiedener Nuancen beim Umschmelzen mit Faser-Polyester zu Granulaten spezielle Nuancen einwandfrei und homogen rezeptiert und hergestellt werden können. Sie können auch mit in Polyester löslichen Farbkörpern kombiniert werden.

Mit den erfindungsgemäss hergestellten Pigmentzubereitungen wird in der Spinnfärbung von Polyesterfasern eine einwandfreie Verteilung der Pigmente im Polyester ermöglicht, wobei weder der Spinn- und Streckprozess beeinträchtigt, noch die Faserqualität verschlechtert werden. Trotz der relativ niedrigen Schmelzpunkte der aus dem Vorkonzentrat stammenden und in entsprechender Menge im Endprodukt vorhandenen Polyester sind die granulierten Pigmentzubereitungen nicht klebrig und können deshalb auch bei den in der Faserindustrie üblichen Temperaturen von 160°C und höher getrocknet werden.

Das Färben der Polyester mit den erfindungsgemäss erhaltenen Pigmentzubereitungen geschieht nach bekannten Methoden, wobei die zu färbenden Polyester zweckmässig in Form von Pulvern, Schnitzeln oder Granulaten mit der Pigmentzubereitung vermischt, im Extruder geschmolzen und zu Folien oder Fasern ausgepresst oder zu Platten gegossen werden. Im vorliegenden Fall gilt das besondere Interesse dem Auspressen zu Fasern, da sich hierbei die Vorteile beim Färben von linearen Polyestern am stärksten bemerkbar machen.

In den nachfolgenden Beispielen bedeuten die Teile, sofern nichts anderes angegeben wird, Gewichtsteile, und die Prozente Gewichtsprozente, während die Temperaturen in Celsiusgraden angegeben sind.

## Beispiel 1

In einem heiz- und kühlbaren 50-Liter-Doppelmuldenkneter werden 7,5 kg eines im Handel unter der Bezeichnung Dynapol L 206® erhältlichen linearen thermoplastischen Copolyesters (Dynamit Nobel AG; Basis: aromatische Dicarbonsäuren und aliphatische Diole, Molekulargewicht 18 000 bis 20 000, Schmelzbereich 90—115°), 5,0 kg Colour Index Pigment Red 166, 30,0 kg feingemahlenes Natriumchlorid und 4,5 kg Diacetonalkohol während 5 Stunden bei einer Knetmassetemperatur von 85—90° geknetet. Durch Zugabe von Wasser wird die Knetmasse in ein verhältnismässig feinkörniges Granulat übergeführt, welches in ca. 250 l Wasser suspendiert und einer Nassmahlung unterworfen wird. Die erhaltene Suspension wird filtriert und mit Wasser salz- und lösungsmittelfrei gewaschen. Anschliessend wird während 48 Stunden bei 75° im Vakuumschrank getrocknet. 5,0 kg dieses feinen Granulates werden mit 5,0 kg pulverförmigem Polyäthylenterephthalat (erhalten z.B. entweder durch Mahlen von Granulat in einer Schlaghammermühle unter Zusatz von festem Kohlendioxid oder durch Ausfällen aus einer Lösung von Granulaten, beispielsweise in $\gamma$-Butyrolacton, durch Zusatz von Wasser, Filtrieren und Trocknen) während 3 Stunden in einem Fass auf einem Rollgestell gemischt; diese Mischung wird während 72 Stunden im Vakuum bei 60—70° getrocknet und anschliessend auf einem Labor-Ko-Kneter System List (Typ PR/ASV 46, Buss) bei Temperaturen zwischen 175 und 242° zu einem Draht umgeschmolzen, welcher auf einer Schneidemaschine (FOURNE, WILCO) zu Zylindergranulat von ca. 3 mm $\phi$ und 2—3 mm Länge geschnitten wird.

Anstelle eines Ko-Kneters System List können zum Umschmelzen mit ebenso gutem Resultat ein Ko-Kneter Werner & Pfleiderer Typ ZDS—K28 oder ein Leistritz-Zweiwellen extruder Typ LSM—30.34 verwendet werden.

Das erhaltene Granulat weist folgende Zusammensetzung auf: 20% Pigment, 30% Copolyester Dynapol L 206®, 50% Polyäthylenterephthalat; es ist sehr gut geeignet für die Spinnfärbung von Polyesterfasern.

Beispiel 2

In einem 50-Liter-Doppelmuldenkneter werden 9,0 kg Dynapol L 206® (s. Beispiel 1), 6,0 kg Indanthron, 24,0 kg feingemahlenes Natriumchlorid und 4,8 kg Diacetonalkohol während 4 Stunden bei einer Knettmassetemperatur von 85—90° geknetet. Durch Zugabe von Eis wird die Knetmasse zerlegt und granuliert. Dieses Granulat wird in 250 l Wasser suspendiert und einer Nassmahlung unterworfen. Man filtriert und wäscht salz- und lösungsmittelfrei. Dann wird während 48 Stunden bei 75° im Vakuumschrank getrocknet. 5.0 kg des erhaltenen feinen Granulates werden analog Beispiel 1 mit 5,0 kg pulverförmigem Polyäthylenterephthalat zu blauem Zylinder-Granulat (oder Band-Granulat) verarbeitet, welches sich ausgezeichnet für die Spinnfärbung von Polyesterfasern eignet.

Beispiel 3

Verfährt man wie in Beispiel 1, verwendet jedoch anstelle von Dynapol L 206® den linearen, gesättigten Copolyester Vesturit BL 952® der Chemischen Werke Hüls (Schmelzbereich 90—130°), so erhält man ein weiteres, für die Massefärbung von Polyesterfasern sehr gut geeignetes Rot-Präparat.

Beispiel 4

In einem 50-Liter-Doppelmuldenkneter wird folgende Knetmasse angesetzt: 7,5 kg Vesturit BL 952® (s. Beispiel 3), 5,0 kg rohes $\beta$-Kupferphthalocyanin, 30,0 kg feingemahlenes Natriumchlorid, 4,5 kg Diacetonalkohol. Nach einer Knetdauer von 6 Stunden bei 80—85° wird die Knetmasse durch Zusatzt von Wasser in ein feines Granulat zerlegt, welches in 500 l Wasser suspendiert und nach einer Nassmahlung filtriert wird. Der Filterkuchen wird mit Wasser salz- und lösungsmittelfrei gewaschen. Nach einer Trocknung im Vakuumschrank (48 Std. bei 60—70°) kann das erhaltene, rieselfähige, griessförmige 40%-ige Präparat durch Verarbeiten mit einer gleichen Menge pulverförmigem Polyäthylenterephthalat, wie im Beispiel 1 beschrieben, zu 20% $\beta$-Kupferphthalocyanin enthaltenden blauen Granulaten verarbeitet werden, welche sich hervorragend zur Spinnfärbung von Polyesterfasern eignen (Temperaturen des Ko-Kneters zwischen 185° und 245°).

Beispiel 5

In einem Laborkneter werden 48 Teile des Handelsproduktes Vitel VPE—386A® (linearer, gesättigter Copolyester der Firma Goodyear Co. mit einem Molekulargewicht von 20 000—30 000 und einem zwischen 100° und 125° liegenden Schmelzbereich), 32 Teile des im Beispiel 2 erwähnten blauen Pigmentes, 160 Teile feingemahlenes Natriumchlorid und 43 Teile Diacetonalkohol während 5 Stunden bei 90° geknetet. Durch Zugabe von 50 Teilen Wasser wird die Knetmasse zerlegt und granuliert. Das grobkörnige Granulat wird in 4000 Teilen Wasser suspendiert und auf einer Zahnkolloidmühle zu feinkörnigem Granulat vermahlen. Nach Filtration wird der Filterkuchen mit Wasser salz- und lösungsmittelfrei gewaschen und im Vakuumschrank bei 60—70° getrocknet. Man erhält ein etwas grobkörniges Pulver. 150 Teile dieses Pulvers werden mit 150 Teilen gemahlenem Polyäthylenterephthalat auf einem Rollgestell vermischt. Diese Mischung wird nach einer Trocknung bei 60—70° im Vakuum auf einem Extruder aufgeschmolzen und zu Drähten von 3 mm $\phi$ verarbeitet, welche anschliessend mittels einer Schneidemaschine zu blauem, zylinderförmigem Granulat von 2—3 mm Länge zerhackt werden. Das erhaltene Granulat besteht aus 20% Farbkörper, 30% Copolyester Vitel VPE—3862A® und 50% Polyäthylenterephthalat und eignet sich ausgezeichnet für die Spinnfärbung von Polyesterfasern.

Beispiel 6

In einem Laborkneter wird folgende Knetmasse angesetzt: 48 Teile eines Copolyesters (Basis Terephthalsäure/Azelainsäure-1,4-Butandiol/Diäthylenglykol; Schmelzbereich 125—155°), 32 Teile Russ-Schwarz Printex 400® (Degussa), 128 Teile feingemahlenes Natriumchlorid und 38 Teile Dimethylformamid. Man knetet während 5 Stunden bei ca. 95° und kühlt dann auf 50° ab. Nun wird die Knetmasse durch Zusatz von ungefähr 40 Teilen Eis in feine Granulate zerlegt. Die Granulate werden in 4000 Teile Wasser eingetragen und diese Suspension nach mehrstündigem Rühren filtriert. Der Filterkuchen wird salz- und lösungsmittelfrei gewaschen und dann im Vakuum bei 60—70° getrocknet. Man mischt nun 200 Teile des derart erhaltenen Präparates mit 200 Teilen pulverförmigem Polyäthylenterephthalat und erhält nach Aufarbeitung analog Beispiel 5 schwarze Granulate, die sich hervorragend für die Massefärbung von Polyesterfasern eignen.

Beispiel 7

a) 540 Teile eines in Granulatform vorliegenden Polyäthylenterephthalates werden mit 60 Teilen eines nach den vorausgehenden Beispielen erhaltenen Farbkörper-Granulates durch Schütteln in einem geschlossenen Gefäss oder auf dem Rolltisch vermischt. Das so erhaltene Gemisch aus ungefärbtem Polyäthylenterephthalat- und Präparat-Granulat wird während ca. 48 Stunden bei 100° und ca. 0,5 Torr. getrocknet und dann auf einer Extruder-Schmelzspinn-Anlage (Typ Inventa) bei 290° Spinntemperatur, einer Verweilzeit von ca. 10 Minuten und mit einem Abzug von 300 m/Min. mit Hilfe einer Düse (24 Loch, 0,35 mm Lochdurchmesser) zu Polyesterendlosprimärfäden versponnen. Diese werden anschliessend auf einer Streckzwirnmaschine bei 100° Galettentemperatur im Verhältnis 1:4,022 gestreckt. Die Fasereigenschaften sind im wesentlichen gleich wie bei ungefärbten Fasern.

b) Trocknet man das Gemisch aus ungefärbtem Polyäthylenterephthalat- und Masterbatch-Granulat während 24—48 Stunden bei 160°, so erhält man ebenso gute Resultate.

Beispiel 8

In einem heiz- und kühlbaren Laborkneter von 0,5 Liter Nutzinhalt werden 48 Teile Dynapol L 206® (siehe Beispiel 1), 32 Teile Colour Index Pigment Red 88, 160 Teile feingemahlenes Natriumchlorid und 25,6 Teile Diacetonalkohol während 5 Stunden geknetet; die Temperatur der Knetmasse liegt zwischen 78 und 82°. Man gibt dann 55 Teile Eis zu, um die Knetmasse zu zerlegen und zu granulieren. Das erhaltene, etwas unregelmässige Granulat wird in 3000 Teilen Wasser angerührt und auf einer Zahnkolloidmühle zu einem gleichmässig feinen Granulat vermahlen. Man filtriert und wäscht den Filterkuchen salz- und lösungsmittelfrei; anschliessend wird in einem Vakuumschrank getrocknet; Temperatur: 60—70°. 100 Teile dieses getrockneten Präparates werden mit 100 Teilen gemahlenem Polyäthylenterephthalat in einem Turbula-Mischer vermischt. Man trocknet erneut bei 60—70° im Vakuum und verarbeitet die Mischung in einem Extruder bei Temperaturen zwischen 190 und 230° zu Drähten von ca. 3 mm Durchmesser. Diese Drähte werden in einer Hackmaschine zu Zylindergranulaten von 2—3 mm Länge geschnitten. Das erhaltene abriebfeste Granulat besteht aus 20% Pigment, 30% Copolyester Dynapol L 206® und 50% Polyäthylenterephthalate und ist hervorragend geeignet für die Spinnfärbung von Polyesterfasern.

Beispiel 9

In einem Laborkneter (Nutzinhalt: 0,5 Liter) wird folgende Mischung während 5 Std. bei einer Temperatur von 85—90° geknetet: 48 Teile eines Copolyesters auf Basis von Terephthalsäure/Isophthalsäure/Azelainsäure-1,4-Butandiol/Diäthylenglykol (Schmelzbereich: 135—150°), 32 Teile Colour Index Pigment Violet 23, 160 Teile feingemahlenes Natriumchlorid und 43 Teile Diacetonalkohol. Man kühlt dann auf 50° ab und zerlegt die Knetmasse durch Zusatz von 30 Teilen Eis in feine Granulate. Diese Granulate werden in 3000 Teile Wasser von 60—65° eingetragen, und die so erhaltene Suspension wird während mehrerer Stunden gerührt. Man filtriert und wäscht den Filterkuchen salz- und lösungsmittelfrei. Anschliessend wird im Vakuum bei 60—70° getrocknet. 200 Teile des getrockneten Präparates werden mit 200 Teilen pulverförmigem Polyäthylenterephthalat gemischt. Diese Mischung wird bei 60—70° im Vakuumschrank getrocknet, auf einem Extruder aufgeschmolzen (Temperaturen zwischen 180 und 260°) und zu einem Draht von 3 mm Durchmesser verarbeitet. Dieser Draht wird mittels einer Schneidmaschine zu violetten Zylindergranulaten von 2—3 mm Länge zerschnitten. Das Granulat weist folgende Zusammensetzung auf: 20% Farbkörper, 30% Copolyester und 50% Polyäthylenterephthalat. Es eignet sich sehr gut für die Spinnfärbung von Polyesterfasern.

Beispiel 10

Man setzt in einem Laborkneter folgende Knetmasse an: 32 Teile Colour Index Pigment Yellow 129, 48 Teile des Handelprodukts Vesturit BL 950® (linearer gesättigter Copolyester der Chemischen Werke Hüls; Schmelzbereich 100—150°), 160 Teile feingemahlenes Natriumchlorid und 29 Teile Diacetonalkohol. Nach einer Knetdauer von 4 Stunden (Temperatur der Knetmasse: 85—88°) kühlt man auf 50° ab und zerlegt die Knetmasse durch Zusatz von ungefähr 40 Teilen Eis in feine Granulate. Diese Granulate werden in 4000 Teile Wasser von ca. 70° eingetragen, auf einer Zahnkolloidmühle zu feinkörnigem, gleichmässigem Granulat vermahlen und filtriert. Man wäscht das Filtergut lösungsmittel- und salzfrei und vermischt nach einer Trocknung im Vakuum bei 60—70° 200 Teile des derart erhaltenen Feingranulates mit 200 Teilen Pulverförmigem Polyäthylenterephthalat. Diese Mischung wird unter den gleichen Bedingungen, wie sie im Beispiel 9 angeführt sind, getrocknet und anschliessend in einem Extruder bei Temperaturen zwischen 180 und 260° zu einem Draht verarbeitet. Dieser Draht wird in einer Hackmaschine zu gelben Zylindergranulaten von 2—3 mm Länge geschnitten, die sich vorzüglich zur Spinnfärbung von Polyesterfasern eignen. Ihre Zusammensetzung: 20% Pigment, 30% Copolyester Vesturit BL 950® und 50% Polyäthylenterephthalat.

Beispiel 11

32 Teile des Colour Index Pigment Yellow 110, 48 Teile Copolyester Vesturit BL 951® (Handelsprodukt der Chemischen Werke Hüls; Schmelzbereich 90—140°), 128 Teile feingemahlenes Natriumchlorid und 25,6 Teile Diacetonalkohol werden in einem Laborkneter bei 85—90° während 4 Std. geknetet. Dann wird gekühlt und bei einer Temperatur von ca. 50° mit 30 Teilen Eis versetzt, was zur Zerlegung der Knetmasse in feine Granulate führt. Diese Granulate werden in 4000 Teilen Wasser von ca. 60° suspendiert und in einer Zahnkolloidmühle zu gleichmässig feinen Granulaten vermahlen. Man filtriert und wäscht den Filterkuchen salz- und lösungsmittelfrei. Dann wird bei 60—70° im Vakuum getrocknet, und 150 Teile des erhaltenen Granulates werden mit 150 Teilen gemahlenem Polyäthylenterephthalat vermischt. Diese Mischung wird nach einer Trocknung (Vakuumschrank, 60—70°) in einem Extruder (Temperaturen: 180—260°) zu einem Draht von 3 mm $\phi$ umgeschmolzen. In einer Hackmaschine wird dieser Draht zu gelben Zylindergranulaten von 2—3 mm Länge zerschnitten. Dieses Zylindergranulat kann mit sehr guten Resultaten nach Beispiel 7 zur Färbung von Polyesterfasern eingesetzt werden. Zusammensetzung der Granulate: 20% Farbkörper, 30% Copolyester Vesturit BL 951® und 50% Polyäthylenterephthalat.

Beispiel 12

In einem Laborkneter von 0,5 Liter Nutzinhalt, heiz- und kühlbar, wird folgende Mischung während 5 Std. bei ca. 85° geknetet: 32 Teile das Chinophthalon-Gold-orange-Pigmentes der Formel

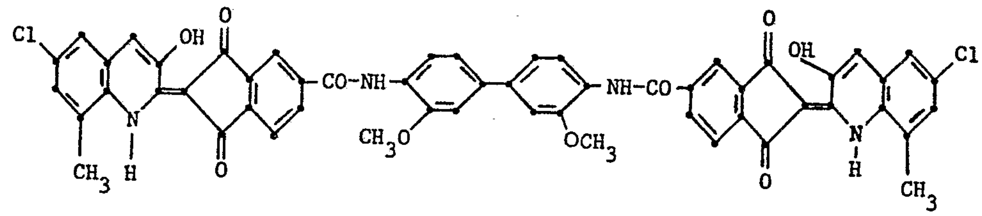

48 Teile Copolyester Dynapol L 205® (Handelsprodukt der Firma Dynamit Nobel AG.: linearer Copolyester auf Basis von aromatischen Dicarbonsäuren und aliphatischen Diolen; mittleres Molekulargewicht ca. 15000; Schmelzbereich 85—135°), 160 Teile feingemahlenes Natriumchlorid und 25,6 Teile Diacetonalkohol. Nach der angegebenen Knetdauer wird gekühlt und bei einer Temperatur von ca. 55° mit 30 Teilen Eis versetzt; dadurch wird die Knetmasse in feine Granulate zerlegt, welche in 4000 Teilen Wasser von 60° suspendiert werden. Diese Suspension wird in einer Zahnkolloidmühle bearbeitet; man erhält so gleichmässig feine Granulate, welche nach dem Filtrieren salz- und lösungsmittelfrei gewaschen werden. Nach einer Trocknung im Vakuum bei 60—70° werden 100 Teile dieses Granulates mit 300 Teilen gemahlenem Polyäthylenterephthalat vermischt und diese Mischung bei 60—70° abermals im Vakuum getrocknet. In einem Laborextruder wird das Präparat bei Temperaturen zwischen 180 und 260° zu einem Draht umgeschmolzen (Durchmesser: 3 mm); dieser Draht wird zu Zylindergranulaten von 2—3 mm Länge zerhackt, welche nach Beispiel 7 zur Färbung von Polyesterfasern verwendet werden. Zusammensetzung des Präparates: 10% Pigment, 15% Dynapol L 205® und 75% Polyäthylenterephthalat.

Beispiel 13

In einem Laborkneter werden 48 Teile eines aliphatischen Polyesters auf Basis von Sebazinsäure/Hexandiol mit einem mittleren Molekulargewicht von 1550 und einem Schmelzbereich von ungefähr 70—82° aufgeschmolzen. Dieser Schmelze werden 125,5 Teile eines wässerigen Filterkuchens von Colour Index Pigment Orange 43 mit einem Trockengehalt von 25,5% zugesetzt und die Masse bei einer Temperatur von 87° solange geknetet, bis das abgetrennte Wasser vollkommen klar und farblos ist. Man setzt 40 Teile Eis zu und knetet in Gegenwart der gesamten Menge Wasser (aus der Knetmasse abgetrennt bzw. in Form von Eis zugesetzt) under Kühlung weiter. Die Knetmasse zerfällt in feine Granulate. Diese Granulate werden getrocknet (Vakuum, 50°). 100 Teile dieser Granulate werden mit 1233 Teilen Polyäthylenterephthalat-Pulver gemischt und diese Mischung nach einer Trocknung im Vakuum bei 50° auf einem Laboreinwellenextruder (Temperaturen: 180—260°) zu einem Draht von 3 mm $\phi$ verarbeitet, welcher in einer Hackmaschine zu Zylinder-Granulaten von ca. 3 mm Länge zerhackt wird. Diese Granulate können mit ausgezeichneten Resultaten nach Beispiel 7 unter Berücksichtigung des niedrigeren Pigmentgehaltes von 3% zur Spinnfärbung von Polyesterfasern verwendet werden. Die Granulate weisen folgende Zusammensetzung auf: 3% Farbkörper, 4,5% aliphatischer Polyester und 92,5% Polyäthylenterephthalat.

Beispiel 14

Man knetet folgende Mischung während 4 Std. bei 90° in einem Laborkneter: 32 Teile Colour Index Pigment Violet 19, 48 Teile Dynapol L 206® (s. Beispiel 1), 128 Teile feingemahlenes Natriumchlorid und 25,6 Teile Diacetonalkohol. Durch Zugabe von 30 Teilen Eis bei gleichzeitiger Kühlung

wird die Knetmasse zerlegt, in Wasser eingetragen und auf einer Zahnkolloidmühle zu feinem Granulat vermahlen. Dieses Granulat wird in 3000 Teilen Wasser von ungefähr 60° suspendiert. Man rührt unter Beibehaltung dieser Temperatur während 1 Std., filtriert und wäscht das Filtergut salzund lösungsmittelfrei. Dann wird bei 60—70° im Vakuumschrank getrocknet. 50 Teile des getrockneten feinen Granulates werden mit 150 Teilen gemahlenem Polyäthylenterephthalat vermischt. Diese Mischung wird im Vakuum bei 60—70° getrocknet und in einem Extruder bei Temperaturen zwischen 180 und 260° zu einem glatten Draht verarbeitet, der in einer Hackmaschine zu Granulaten von 2—3 mm Länge zerhackt wird (Durchmesser ca. 3 mm). Zusammensetzung dieser Granulate: 10% Farbkörper, 15% Dynapol L 206® und 75% Polyäthylenterephthalat.

Beispiel 15

15 Teile Colour Index Pigment Red 166, 17 Teile rohes $\beta$-Kupferphthalocyanin, 48 Teiles eines aliphatischen Polyesters (Basis Sebazinsäure/Aethylenglykol, Molekulargewicht ca. 4000—5000, Schmelzbereich ca. 72—81°), 190 Teile feingemahlenes Natriumchlorid und 55,6 Teile Diacetonalkohol werden bei 60° während 4 Std. in einem Laborkneter geknetet. Dann wird gekühlt und die Masse durch Zugabe von 40 Teilen Eis in feine Granulate zerlegt. Diese Granulate werden in 4000 Teilen Wasser suspendiert und auf einer Zahnkolloidmühle zu feinem Granulat vermahlen. Man filtriert und wäscht die Granulate frei von Salz und Lösungsmittel. Bei 50° wird im Vakuum getrocknet, und anschliessend werden 50 Teile des Granulates mit 350 Teilen Polyäthylenterephthalat-Pulver vermischt. Diese Mischung wird getrocknet und auf einem Extruder (180—260°) zu einem Draht umgeschmolzen, welcher zu Granulaten zerhackt wird; Zusammensetzung dieser Granulate: 5% Farbkörper, 7,5% aliphatischer Polyester, 87,5% Polyäthylenterephthalat. Polyesterfasern lassen sich mit Hilfe dieser Granulate in der Masse mit einer interessanten Marineblau-Nuance färben.

Beispiel 16

In einem heiz- und kühlbaren Laborkneter von 0,5 Liter Nutzinhalt werden 32 Teile Colour Index Pigment Red 224, 48 Teile Versturit BL 952® (s. Beispiel 3), 160 Teile feingemahlenes Natriumchlorid und 25,6 Teile Diacetonalkohol während 4 Std. bei 88° geknetet. Man kühlt und versetzt mit 30 Teilen Eis, wobei man ein relativ feines Granulat erhält, welches in Wasser angerührt und in einer Zahnkolloidmühle zu einem einheitlich feinen Granulat vermahlen wird. Nach dem Filtrieren wird salz- und lösungsmittelfrei gewaschen und bei 60—70° im Vakuum getrocknet. 100 Teile des getrockneten Granulates werden mit 100 Teilen gemahlenem Polyäthylenterephthalat vermischt. Diese Mischung wird nach einer Trocknung im Vakuum bei 60—70° in einem Extruder (Temperaturen zwischen 180 und 260°) zu Drähten umgeschmolzen, welche in einer Hackmaschine zu Granulaten verarbeitet werden. Sie eignen sich vorzüglich zur Färbung von Polyesterfasern in der Masse. Ihre Zusammensetzung: 20% Farbkörper, 30% Vesturit BL 952® und 50% Polyäthylenterephthalat.

Beispiel 17

Während 4 Std. wird bei 85° folgende Knetmasse bearbeitet: 32 Teile Colour Index Pigment Brown 26, 48 Teile Dynapol L 206® (s. Beispiel 1), 160 Teile feingemahlenes Natriumchlorid und 25,6 Teile Diacetonalkohol. Während des Kühlens versetzt man mit 30 Teilen Eis, was zum Zerlegen der Knetmasse in feine Granulate führt. Diese Granulate werden in wässeriger Suspension auf einer Zahnkolloidmühle gemahlen und filtriert. Das salz- und lösungsmittelfrei gewaschene Filtergut wird getrocknet (Vakuum, 60—70°) und 100 Teile davon mit 100 Teilen eines zwischen 185 und 200° schmelzenden Copolyesters (Terephthalsäure/Isophthalsäure/Azelainsäure-Aethylenglykol) vermischt. Diese Mischung wird im Vakuum bei 60—70° getrocknet und in einem Extruder bei Temperaturen zwischen 150 und 230° zu einem Draht verarbeitet, der in einer Hackmaschine zerhackt wird. Die erhaltenen Granulate weisen folgende Zusammensetzung auf: 20% Farbkörper, 30% Copolyester Dynapol L 206® und 50% des höherschmelzenden Copolyesters. Sie eignen sich vorzüglich für die Massefärbung von Polyesterfasern.

**Patentansprüche**

1. Verfahren zur Herstellung einer Pigmentzubereitung zum Färben linearer Polyester in der Masse, dadurch gekennzeichnet, dass man aus 20 bis 80 Gewichtsteilen Pigment und 80 bis 20 Gewichtsteilen eines Polyesters, der zwischen 60 und 160°C schmilzt, durch Lösungsmittel-Salzknetung oder durch Flushen des Pigments in die Schmelze des Polyesters ein Vorkonzentrat herstellt und dieses mit einem spinnbaren linearen Polyester verschmilzt und zu Granulat verarbeitet.

2. Verfahren nach Anspruch 1, dadurch gekennzeichnet, dass man zur Herstellung des Vorkonzentrats von 40 bis 60 Gewichtsteilen Pigment und 60 bis 40 Gewichtsteilen eines Polyesters ausgeht.

3. Verfahren nach Anspruch 1, dadurch gekennzeichnet, dass man das Vorkonzentrat in derartiger Menge mit einem spinnbaren Polyester verschmilzt und granuliert, dass das Granulat 3 bis 30 Gewichtsprozent Pigment enthält.

4. Verfahren nach Anspruch 3, dadurch gekennzeichnet, dass man das Vorkonzentrat in derartiger

Menge mit einem spinnbaren Polyester verschmilzt und granuliert, dass das Granulat 5 bis 25 Gewichtsprozent Pigment enthält.

5. Verfahren nach Anspruch 1, dadurch gekennzeichnet, dass der Polyester, der zwischen 60 und 160°C schmilzt, aus

a) 25—30 Mol.-% Terephthalsäureresten und

20—25 Mol.-% Azelainsäureresten oder von Resten einer aliphatischen Dicarbonsäure mit 4—12 C-Atomen und

b) 50 Mol.-% Butandiol- und Diäthylenglykol- oder Triäthylenglykolresten im Verhältnis von 15:1 bis 5:1 besteht.

6. Pigmentzubereitung, erhalten gemäss Anspruch 1.

7. Pigmentzubereitung nach Anspruch 6, gekennzeichnet durch einen Pigmentgehalt von 3 bis 30 Gewichtsprozent, vorzugsweise 5 bis 25 Gewichtsprozent.

8. Lineare Polyester, enthaltend als färbende Komponente eine nach dem Verfahren gemäss Anspruch 1 erhaltene Pigmentzubereitung.

9. Verwendung der Pigmentzubereitung gemäss Anspruch 6 zum Färben linearer Polyester in der Masse.

## Claims

1. A process for the production of a pigment preparation for colouring linear polyesters in the melt, which comprises forming a concentrate from 20 to 80 parts of a pigment and 80 to 20 parts of a polyester which melts between 60° and 160°C, by kneading in the presence of a salt and a solvent or by flushing the pigment into the melt of the polyester, melting said concentrate with a spinnable linear polyester and processing the melt to granules.

2. A process according to claim 1, which comprises forming the concentrate from 40 to 60 parts by weight of pigment and 60 to 40 parts by weight of a polyester.

3. A process according to claim 1, wherein the concentrate is melted and granulated with the spinnable linear polyester in an amount such that the resulting granules contain 3 to 30% by weight of pigment.

4. A process according to claim 3, wherein the concentrate is melted and granulated with a spinnable polyester in an amount such that the resulting granules contain 5 to 25% by weight of pigment.

5. A process according to claim 1, wherein the polyester, which melts at 60° to 160°C, consists of

a) 25—30 mol.% of radicals of terephthalic acid and 20—25 mol.% of radicals of azelaic acid or of radicals of an aliphatic dicarboxylic acid containing 4 to 12 carbon atoms, and

b) 50 mol.% of radicals of butanediol and diethylene glycol or triethylene glycol in the ratio 15:1 to 5:1.

6. A pigment preparation obtained by the process of claim 1.

7. A pigment preparation according to claim 6 which contains 3 to 30% by weight, preferably 5 to 25% by weight, of pigment.

8. A linear polyester which contains, as colouring component, a pigment preparation obtained by the process of claim 1.

9. A method of colouring linear polyesters in the melt, which comprises the use of a pigment preparation as claimed in claim 6.

## Revendications

1. Procédé pour préparer une composition pigmentaire destinée à colorer des polyesters linéaires dans la masse, procédé caractérisé en ce qu'on prépare à partir de 20 à 80 parties en poids de pigment et de 80 à 20 parties en poids d'un polyester, qui fond entre 60° et 160°C, par malaxage en présence d'un sel et d'un solvant ou par introduction du pigment humide dans la masse fondue du polyester, un concentré préalable que l'on fait fondre avec un polyester linéaire filable et que l'on transforme en des granulés.

2. Procédé selon la revendication 1, caractérisé en ce que, pour préparer le concentré préalable, on part de 40 à 60 parties en poids du pigment et de 60 à 40 parties en poids d'un polyester.

3. Procédé selon la revendication 1, caractérisé en ce qu'on fait fondre et granule le concentré préliminaire en une quantité telle avec un polyester filable, que les granulés obtenus contiennent 3 à 30% en poids du pigment.

4. Procédé selon la revendication 3, caractérisé en ce qu'on fait fondre et granule le concentré préliminaire en une quantité telle avec un polyester filable, que les granulés obtenus contiennent 5 à 25% en poids du pigment.

5. Procédé selon la revendication 1, caractérisé en ce que le polyester, qui fond entre 60 et 160°C, consiste en:

a) 25 à 30 moles % de radicaux de l'acide téréphtalique et

20 à 25 moles % de radicaux de l'acide azélaîque ou de radicaux d'un acide dicarboxylique aliphatique comportant 4 à 12 atomes de carbone et

b) 50 moles % de radicaux de butanediol et de diéthylène-glycol ou de triéthylène-glycol, selon un rapport de 15:1 à 5:1.

6. Composition pigmentaire obtenue selon la revendication 1.

7. Composition pigmentaire selon la revendication 6, caractérisée par une teneur en pigment de 3 à 30% en poids, avantageusement 5 à 25% en poids.

8. Polyester linéaire, caractérisé en ce qu'il contient comme composant colorant une préparation pigmentaire obtenue selon le procédé selon la revendication 1.

9. Utilisation de la composition pigmentaire selon la revendication 6 pour colorer des polyesters linéaires dans leur masse.